# EUROPEAN PATENT APPLICATION

(11) **EP 4 656 822 A1**
(43) Date of publication of application: **03.12.2025**
(21) Application number: 23918247.0
(22) Date of filing: 23.01.2023
(51) Int. Cl.: E04H 12/34, F03D 13/10, F03D 13/20

(54) **WIND TURBINE SELF-LIFTING SYSTEM AND METHOD OF ASSEMBLY**

(71) Applicant: Nabrawind Technologies, S.L., 31002 Navarra Pamplona (ES)
(72) Inventor: SANZ PASCUAL, Eneko, 31002 Pamplona (ES); AROCENA DE LA RÚA, Ion, 31001 Pamplona (ES); IRIARTE ELETA, Javier, 31180 Zizur Mayor (ES); MARTÍ GASTALDO, Juan José, 28017 Madrid (ES)
(86) International application number: PCT/ES2023/070033
(87) International publication number: WO 2024/156924

(57) **Abstract**

The invention relates to a self-lifting system formed by three masts (1) with their corresponding winches (2), pulleys and cables (3), a lifting triangle (4) that moves up and down between said masts (1) and supporting bases (5), wherein the three masts (1) are braced (6) against each other. The system has a termporary foundation (10) for supporting the tower sections (9, 9', 9") and the tripod or transition part (21) during the assembly process. The lower flange (18) of the sections incorporates a connection ring (11), where the complementary elements formed by struts (12) and horizontal beams (13) extending from the vértices of the triangle (4) are assembled and joined to each other by a crossbar (14). The struts (12) and the horizontal beams (13) move in a retractable manner and fold by means of associated systems in order to reléase the tower segments. The method of assembly used lifts different types of tubular and mixed wind turbines with lower latticework and offshore wind turbines too.

## Description

### Field of invention

The present self-lifting system assembles a complete wind turbine without the need for large cranes. During the assembly process, it uses the same lifting system for a tubular wind turbine, a tripod-supported wind turbine, or a half-tubular and half-lattice wind turbine with a transition piece in between. All this is for high-rise wind turbines.

### Background

There are technologies related to the lifting of wind turbines, but their viability depends on the effectiveness of supporting the internal loads induced in the tower: vertical force due to the weight and overturning moment due to the tower's small diameter and/or wind loads.

Patent ES2389345 presents a system for the assembly of tall structures. The problem is that the proposed horizontal clamps and cylinder clamps are insufficient to counteract the wind and eccentricity moments and the wind turbine's own weight. These clamps are widely spaced and can damage the tower structure.

Patent EP3146131 lifts tower sections by applying horizontal clamps and support points inserted inside the tubular rings. This is possible because the tower is made of concrete, and holes can be drilled into it to connect the lifting elements. Momentums are reacted with horizontal loads at two heights. The self-lifting system already developed is twice as high as the one developed with the present invention.

Patent EP3130796 describes three lifting systems with auxiliary elements to raise the nacelle and the different modules that make up the tower. In an accompanying embodiment, it also proposes the lifting of tubular towers with complex auxiliary columns, modules, and connecting pieces. These mechanical elements have been replaced and improved.

Patent PCT/ES2021/060866 shows a triangle as a lifting element and three masts braced at the top. The connections between the lifting element and the modules consist of an interface beam that supports a retractable pin that passes through the columns and hydraulic thrusters that act on the columns. This system is suitable for lifting lattice modules, not tubular towers.

The new self-lifting system allows the assembly of any wind turbine with a tubular tower, preferably metal, ending in a tripod or hybrid tower, without the need for large cranes, thanks to new mechanical elements and improvements made to the existing state of the art.

### Description

The self-lifting system of the invention includes a connecting ring at the bottom of the tubular tower sections. Tubular towers do not have anchor points to support vertical loads because the flanges need to have clear connecting holes to connect to the next section. The connection ring is permanently added and is a minimal modification to the flanges of the currently existing tubular sections.

Complementary elements act on this connecting ring, transferring the loads to the triangle. This triangle is supported by three masts braced at the top and separated by a large distance. This distance between the masts, which varies between 15 and 25 m, compared to the tower's 4.5 m diameter, provides a three-fold ratio of the distances to the diameter and counteracts the moments.

The aforementioned complementary elements are strut columns and radial beams that keep the tower and nacelle vertical. Since the tower's diameter is small, the existing loads generate overturning moments and quickly lose stability, inducing very strong tensile loads. This is due to the moment reacting within the tower's small radius. The overturning momentums are absorbed by the struts and radial beams and transferred to the three corners of the triangle in the form of small loads.

An object of the invention is that once the tower has been braced with its corresponding nacelle, the self-lifting system progressively rises while new tower sections are verticalized from the bottom of the system.

Another object of the invention is to provide a support structure for the tower sections to rest on during the assembly process. This structure is mounted on the ground, under the self-lifting system, and is a temporary foundation that maintains the stability of the tubular tower, the tripod, or the transition piece during assembly between each lifting cycle.

Another object of the invention is to develop a method for assembling a tubular tower wind turbine using the self-lifting system and without the need for large cranes. The method is valid for a wind turbine with a tubular tower, for one that ends in a tripod that is anchored to the ground, or for one that continues in a transition to which more truss modules are added at the bottom.

The following advantages emerge from all of the above. Very tall wind turbines have assembly problems due to the large cranes being used. In strong winds, the cranes cannot operate, and time and money are wasted waiting for optimal conditions. With the present system, assembly can be achieved in winds of 15 m/s.

### Brief description of the drawings

A brief description will be given below for a series of drawings useful for better understanding the invention and that expressly relate to an embodiment of said invention that is presented as a non-limiting example thereof.
Figure 1 shows the self-lifting system in operation.
Figure 2 shows a second view of the previous figure.
Figure 3 shows another, higher view of the system and its operation.
Figure 4 shows a schematic representation of the complementary elements acting on a tubular tower section.
Figure 5 shows a sectional view of the two flanges of each tower section.
Figure 6 represents a view of a tower section from below, with the lower complementary element and the tower section reinforcements.
Figure 7 shows the steps for assembling a wind turbine with a tubular tower, one topped with a tripod, and a hybrid tubular-lattice structure.

### Detailed description

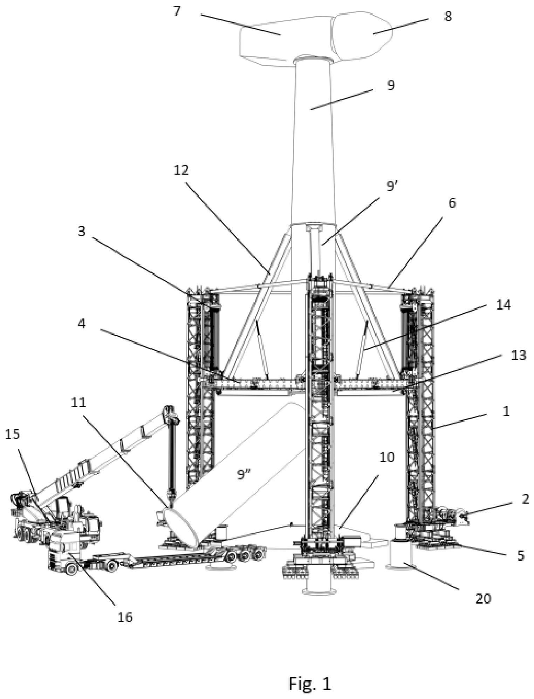

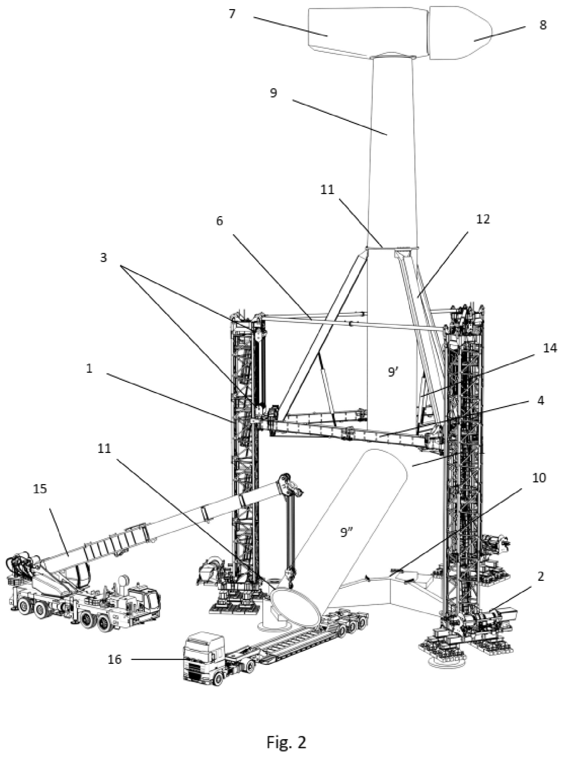

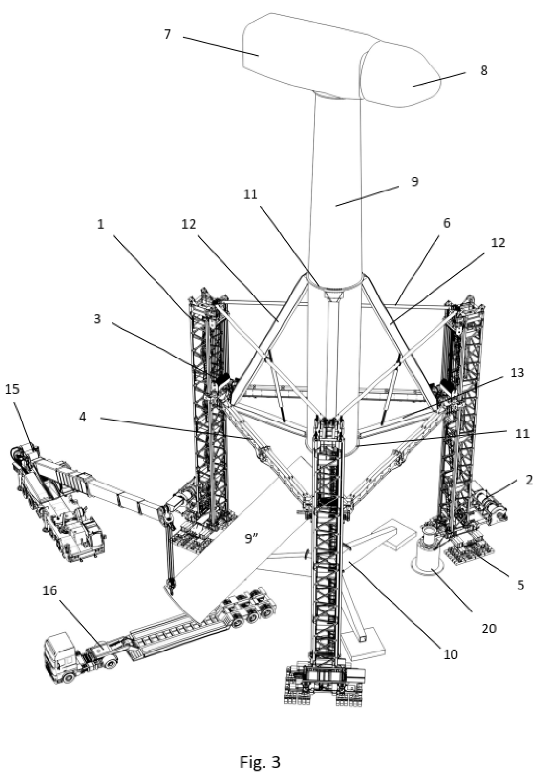

As shown in Figures 1, 2, and 3, the self-lifting system consists of three slender masts (1) with their corresponding winches (2), a system of pulleys and cables (3), a lifting triangle (4) between and in contact with said masts (1), and the corresponding bases (5) that support all of the above. The three masts (1) are braced (6) together from above to stiffen the assembly. This system is part of the state-of-the-art technology used to lift a previously assembled wind turbine and insert lattice modules from below. **In** order to lift the nacelle (7) with the rotor (8) without the blades, as well as various sections of the tubular tower (9), a temporary foundation (10) is added to the lifting system to support the tower sections during the assembly process. This foundation (10) is mounted on the ground, under the self-supporting system. At the bottom of the tubular tower sections (9), and more specifically on their flanges, a connection ring (11) is permanently added where the complementary elements that transfer the loads can be assembled without damaging the tower. These elements are the struts (12) and the horizontal beams (13) that extend from the vertices of the triangle (4) and can be joined together with a crossbar (14).

As shown in the figures, once the corresponding tower section (9') has been propped up with its nacelle (7) and rotor (8), the self-supporting system is progressively raised while a new tower section (9") is verticalized from the lower part of the system, transported to the base in a conventional truck (16), or similar, and assisted by a small crane (15) that grabs the tower section (9") from the connection ring (11). The flange of the upper part of the tower section (9") hangs from the tower section (9'), which incorporates the connection ring (11).

The struts (12) are attached to the connection ring (11) of the upper tower section (9), and the horizontal beams (13) are attached to the connection ring (11) of the lower tower section (9'), preferably with bolted connections. The struts (12) and beams (13) have associated hydraulic/pneumatic elements for retracting and extending. The struts (12) can also be lowered.

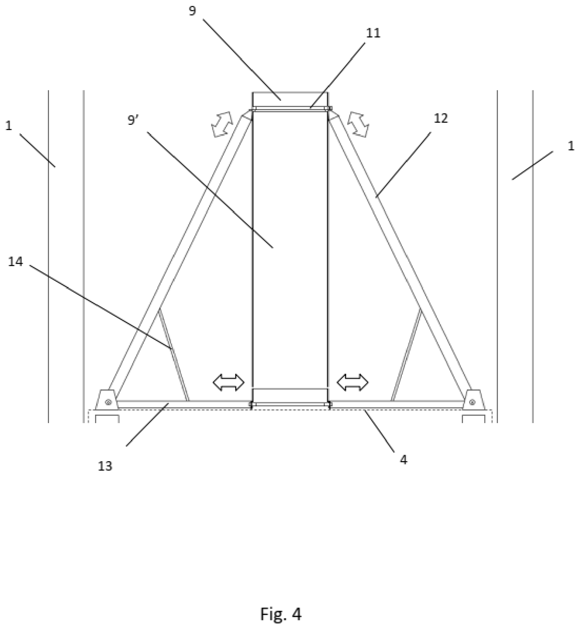

In Figure 4, the lifting triangle (4), shown in dotted lines, anchors the struts (12) and horizontal beams (13) at its vertices and moves up and down between the masts (1) of the self-lifting system. The struts (12) and horizontal beams (13) retract as indicated by the arrows to release the tower sections (9, 9'). The struts (12) can also be collapsed. The crossbar (14) is a hydraulic cylinder that supports the weight of the upright itself and assists in its collapse. The struts (12) and beams (13) may have auxiliary reinforcements at their connection to the vertices of the triangle (4).

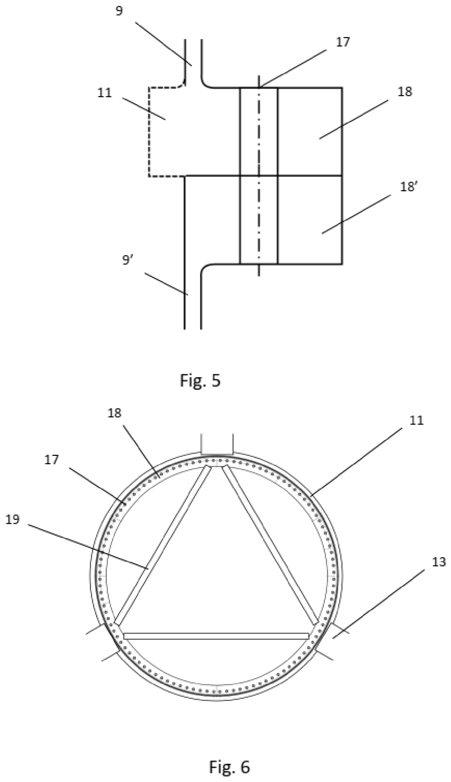

As mentioned above, tubular towers do not have anchor points to support vertical loads. For this reason, a connection ring (11) in the form of a J-shaped protuberance, shown in dotted lines, is permanently added to the flange (18), which supports the complementary elements (12 and 13), all as shown in figure 5, which represents a section on the union of two sections of the tubular tower (9 and 9'). The lower flange (18') must have its connecting holes (17) free to connect to the upper flange (18) through its corresponding bolt or similar element.

Figure 6 shows the tower section (9) viewed from below. A connection ring (11) is shown with its thickest part attached to a flange (18), and the connecting holes (17) are free and ready to connect to another tower section. Reinforcements (19) are attached to the flange (18) to keep the assembly rigid throughout the assembly process. These reinforcements (19) are removed when the pinning process with another tower section has been completed.

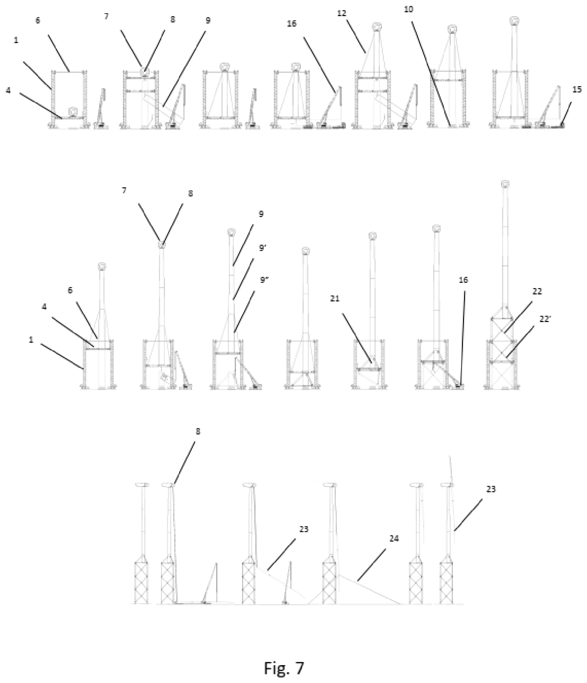

As shown in Figure 7, there are three possible assembly methods:

### a) Assembly method for a wind turbine with a tubular tower:

The nacelle (7) and the rotor (8) without the blades are supported on the temporary foundation (10).

The nacelle (7) and the rotor (8) without the blades are placed on the lifting triangle (4). A section of the tower (9) is brought in by a truck (16) or similar, the upper flange (18) is hung from the nacelle (7) and the lower section (9') which incorporates the connection ring (11), is connected to an auxiliary crane (15).

As the triangle (4) and the nacelle (7) are raised, the tower section (9) is placed vertically until it rests on the temporary foundation (10).

The assembly is lowered until the nacelle (7) rests on the tower section (9), and the two pieces are bolted together.

The tower is secured with several struts (12) that connect to the nacelle (7) and several radial beams (13) that connect to the connection ring (11) of the lower tower section (9). The struts originate from the vertices of the triangle (4) and are joined with bolts. The tower is released from the temporary foundation (10), and lifting begins.

As the triangle (4) raises the nacelle (7) and the tower section (9), a new tower section (9') is placed vertically until it rests on the temporary foundation (10).

The assembly is lowered until the two tower sections (9, 9') can be bolted together. The new tower section (9') is secured with the struts (12) and radial beams (13).

The tower is released from the temporary foundation (10) and hoisting continues, repeating the process with a new tower section (9").

Once all the tower sections have been inserted, the temporary foundation (10) is removed and the wind turbine is anchored to the fixed foundation, which in this case is a circular foundation.

### b) Method for assembling a tripod-supported wind turbine.

The process is the same until all but one of the sections are assembled.

During the lifting of the last tower section, a tripod is placed vertically and assembled. The transition piece (21) has a central tubular section, several transverse columns, and several horizontal columns.

The temporary foundation (10) is removed, and the assembly is lowered until the three legs of the transition piece (21) are anchored to their corresponding foundations (20), which are three pile caps.

### c) Assembly method for a wind turbine with a tubular tower, transition piece, and truss modules.

The process is the same as for lifting a tripod-supported wind turbine (21). However, the tripod from the previous method is used as a transition piece in the present method. As the triangle (4) lifts the nacelle (7), the tubular tower sections (9, 9', 9"), and the transition piece (21), new struts and new cross members are placed vertically beneath the assembly.

Once the struts and cross members have been assembled together to form a lattice module (22), the assembly is lowered until it rests on the three existing foundations (20).

Once the first module (22) has been screwed to the transition piece (21), the entire assembly is lifted and further modules (22') are introduced from below.

Once the assembly process has been completed, the lifting system is dismantled and removed, and the blades (23) are assembled using a cable-assisted lifting system located inside the rotor (8) and supported by retainers (24), enabling the blade (23) to be lifted even in strong incident winds.

## Claims

1. Self-lifting system to assemble a complete wind turbine, consisting of three masts (1) with their corresponding winches (2), a pulley-and-cable system (3), a lifting triangle (4) that moves up and down between said masts (1), the corresponding bases (5) that support all of the above, with the three masts (1) being braced (6) against each other at the top; said system is **characterized in that**:
- it has a temporary foundation (10) on the ground, under the lifting system, to support the tower sections (9, 9', 9") and the transition piece (21) during their assembly process,
- a connection ring (11) in the form of a protuberance is permanently added to the flange (18) of the lower part of the tubular tower sections (9), where the complementary elements are assembled,
- the complementary elements are the struts (12) and the horizontal beams (13) that join together and extend from the vertices of the triangle (4), said struts (12) and horizontal beams (13) move in a retractable and/or folding manner by means of associated devices, to release the tower sections,
- when the self-lifting system is being raised, new tower sections (9") are verticalized at the bottom of the system, the flange (18) of the upper part of the section (9") is hanging from the previous section (9') and the lower part that incorporates the connection ring (11) of the new tower section (9") is connected to a crane (15),
- this system is used for the assembly of a wind turbine with a tubular tower, for one ending in a tripod (21) or for a hybrid one that is half tubular, half lattice with a transition piece (21) in between.

2. Self-lifting system according to the previous claim, **characterized in that** reinforcements (19) are arranged in the lower part of the flange (18) that are removable and maintain the oval shape of the tower section during assembly.

3. Self-Ifting system according to the first claim, **characterized in that** the struts (12) and radial beams (13) are joined by means of bolts to their corresponding connection ring (11) of their corresponding tower section.

4. Self-lifting system according to claim 1, **characterized in that** crossbars (14) connect the struts (12) and the horizontal beams (13) and are hydraulic/pneumatic cylinders that support the weight of the uprights (12) and fold them down.

5. Assembly method to assemble a complete wind turbine with a self-lifting system, **characterized in that** it consists of a wind turbine supported on a conventional tubular tower and its assembly follows the following steps:
- the nacelle (7) and the rotor (8) without the blades are supported on a temporary foundation (10),
- the nacelle (7) and the rotor (8) without the blades are placed on the lifting triangle (4),
- a truck (16) or similar approaches with a section of the tower (9), the flange (18) of the upper part is hung from the nacelle (7) and the lower section is connected to an auxiliary crane (15) with the connection ring (11),
- as the triangle (4) and the nacelle (7) are raised, the section of the tower (9) is placed vertically until it rests on the temporary foundation (10),
- the assembly is lowered until the nacelle (7) rests on the tower section (9) and the two pieces are screwed together,
- the tower section (9) is secured with screws to several struts (12) that go to the nacelle (7) and several radial beams (13) that go to the connection ring (11), the struts (12) and beams (13) are joined and extend from the vertices of the triangle (4), so that they can be retracted and/or folded down, fixing their position,
- the tower is released from the temporary foundation (10) and lifting begins,
- as the triangle (4) that supports the nacelle (7) and a tower section (9) is raised, a new tower section (9') is placed vertically until it rests on the temporary foundation (10),
- the assembly is lowered until the two tower sections (9 and 9'), releasing the struts (12) and beams (13) by retracting or folding them down,
- the tower section (9') is secured again with the struts (12) and the radial beams (13),
- the tower is released from the temporary foundation (10) and the lifting continues, repeating the process with a new tower section (9"),
- once all the tower sections (9, 9', 9") have been inserted, the temporary foundation (10) is removed and the wind turbine is secured with the circular fixed foundation.

6. Assembly method according to the previous claim, **characterized in that** the wind turbine ends on a tripod (21) and its assembly follows the following steps:
- the process is the same until all the sections except one have been assembled,
- during the lifting of the last tower section, a tripod is placed vertically and assembled, said tripod (21) has a central tubular section, several transverse columns, and several horizontal columns,
- the temporary foundation (10) is removed and the assembly is lowered until the three tripod (21) legs are anchored to their corresponding foundations (20).

7. Assembly method according to the preceding claim, **characterized in that** the wind turbine is formed by an upper tubular part, a transition piece (21) and several lower lattice modules (22) and its assembly follows the following steps:
- as the triangle (4) raises the nacelle (7), the tubular tower sections (9, 9', 9") and the tripod or transition piece (21), new struts and new cross members are placed vertically under the assembly,
- once the struts and cross members have been assembled together to form a lattice module (22), the assembly is lowered until it rests on the three existing foundations (20),
- once the first module (22) has been bolted to the transition piece (19), the entire assembly is lifted, and further modules (22') are inserted from below,
- once the last module has been assembled, the wind turbine is anchored to the foundations (20).
